# EUROPEAN PATENT APPLICATION

(11) **EP 4 325 170 A1**
(43) Date of publication of application: **21.02.2024**
(21) Application number: 23153025.4
(22) Date of filing: 24.01.2023
(51) Int. Cl.: G01C 21/30

(54) **MAP MATCHING METHOD, CONTROL APPARATUS, STORAGE MEDIUM, AND VEHICLE**

(30) Priority: 17.08.2022 CN 202210988018
(71) Applicant: Anhui NIO Autonomous Driving Technology Co., Ltd., Hefei, Anhui 230601 (CN)
(72) Inventor: YAN, Niannian, Shanghai, 201805 (CN); LI, Suoheng, Shanghai, 201805 (CN); YUAN, Hongyuan, Shanghai, 201805 (CN); REN, Shaoqing, Shanghai, 201805 (CN)
(74) Representative: Vossius & Partner Patentanwälte Rechtsanwälte mbB

(57) **Abstract**

The disclosure relates to the technical field of intelligent driving, and specifically provides a map matching method, a control apparatus, a non-transitory computer-readable storage medium, and a vehicle, to solve the problem of how to accurately and efficiently match data of maps of different specifications. By the method of the disclosure, a path to be matched is divided, multiple candidate path segments are obtained according to track points of segments of path to be matched and topology information of a target map, multiple candidate paths are obtained according to the multiple candidate path segments, and a final matching result of the path to be matched is obtained. Because the path to be matched is divided into multiple segments of path to be matched, a computation of a process of obtaining the candidate paths can be effectively reduced. Besides, the disclosure only uses general map specification information of the map such as the track points of the path to be matched and the topology information of the target map. Therefore, switching between map manufacturers or the like does not cause loss of input information, and re-adaptation is not required. The method is highly universal and can achieve real-time and efficient map matching.

## Description

### Technical Field

The disclosure relates to the technical field of intelligent driving, and specifically provides a map matching method, a control apparatus, a storage medium, and a vehicle.

### Background Art

In the field of intelligent driving, map matching is a process of associating a series of orderly track points to a path network of a target map. The orderly track points may be vehicle tracks or path shape points of another map. In a process of map matching, due to differences in many aspects such as positioning precision, map production errors, map precision, and map time validity, source track points cannot be accurately matched with a path network of the target map, which needs to be further corrected through a map matching algorithm.

In addition to coordinates of the source track points, input information of a common map matching algorithm usually requires additional information, such as a path network attribute of a source/target map, including a path level, the number of lanes, and the like, to achieve map matching and correction. However, because map specifications and data interfaces of different map manufacturers are greatly different, path network attribute information of different map manufacturers cannot be effectively matched and needs to be converted through an algorithm. As a result, the more information is used in a matching and correction algorithm during map matching, the greater computation is needed, and it is more difficult to achieve matching between data of different map specifications based on a same algorithm.

Accordingly, the field requires a new map matching solution to the foregoing problems.

### Summary of the Disclosure

To overcome the above defects, the disclosure is proposed to solve or at least partially solve the problem of how to accurately and efficiently match data of maps of different specifications.

In a first aspect, the disclosure provides a map matching method, including:
obtaining a path to be matched, and dividing the path to be matched, to obtain multiple segments of path to be matched;
obtaining, according to track points of each segment of path to be matched and topology information of a target map, multiple candidate path segments for each segment of path to be matched in the target map;
obtaining multiple candidate paths according to the multiple candidate path segments; and
obtaining, according to track points of the path to be matched and the multiple candidate paths, a final matching result of the path to be matched.

In a technical solution of the map matching method, the step of "obtaining, according to track points of each segment of path to be matched and topology information of a target map, multiple candidate path segments for each segment of path to be matched in the target map" includes:
for each segment of path to be matched, obtaining, according to the track points of the segment of path to be matched and the topology information of the target map, multiple recall path segments for each segment of path to be matched in the target map, where the recall path segments are path segments that are within a preset distance from each segment of path to be matched and that are in the target map; and
obtaining, according to the segment of path to be matched and topology information of the recall path segments in the target map, the multiple candidate path segments for the segment of path to be matched.

In a technical solution of the map matching method, the topology information includes shape points and path curves, and the step of "obtaining, according to the track points of the segment of path to be matched and the topology information of the target map, multiple recall path segments for each segment of path to be matched in the target map" includes:
obtaining multiple shape points that are within a first preset distance from each track point of the segment of path to be matched and that are in the target map;
obtaining multiple path curves according to the multiple shape points;
comparing projection distances from the track points of the segment of path to be matched to the multiple path curves with a preset distance threshold; and
obtaining, from the multiple path curves based on a comparison result, the multiple recall path segments of the segment of path to be matched.

In a technical solution of the map matching method, the step of "obtaining, according to the segment of path to be matched and topology information of the recall path segments in the target map, the multiple candidate path segments for the segment of path to be matched" includes:
obtaining a path score of each recall path segment according to the current segment of path to be matched and topology information of the recall path segment; and
obtaining, according to path scores of the recall path segments and the topology information of the recall path segments, the multiple candidate path segments for the segment of path to be matched.

In a technical solution of the map matching method, the topology information of the recall path segments includes path network connectivity, and the step of "obtaining, according to path scores of the recall path segments and the topology information of the recall path segments, the multiple candidate path segments for the segment of path to be matched" includes:
sorting the path scores of the recall path segments, and obtaining a preset number of first path segments according to a sorting result;
obtaining, according to path network connectivity of the first path segment, a subsequent path segment with path network connectivity to the first path segment within a second preset distance; and
obtaining the candidate path segments based on the first path segment and the subsequent path segment.

In a technical solution of the map matching method, the step of "obtaining the candidate path segments based on the first path segment and the subsequent path segment" includes:
determining the number of obtained subsequent path segments; and
when the number of obtained subsequent path segments is greater than zero, each subsequent path segment is used as the current recall path segment in turn. And perform the step of "obtaining, according to path scores of the recall path segments and the topology information of the recall path segments, the multiple candidate path segments for the segment of path to be matched" in a loop, until the number of obtained subsequent path segments is zero.

In a technical solution of the map matching method, the step of "obtaining, according to track points of each segment of path to be matched and topology information of a target map, multiple candidate path segments for each segment of path to be matched in the target map" further includes:
determining whether the current segment of path to be matched is the last segment of path to be matched;
if yes, performing the step of "obtaining multiple candidate paths according to the multiple candidate path segments"; and
if not, obtaining a next segment of path to be matched as a current segment of path to be matched, and performing the step of "obtaining, according to the segment of path to be matched and topology information of the recall path segments in the target map, the multiple candidate path segments for the segment of path to be matched".

In a technical solution of the map matching method, the topology information includes a path direction and a curvature, and the step of "obtaining a path score of each recall path segment according to the current segment of path to be matched and topology information of the recall path segment" includes:
for each recall path segment, obtaining, according to projection distances from all track points of the segment of path to be matched to the recall path segment, a coincidence degree between the recall path segment and the segment of path to be matched;
obtaining, according to path directions of the segment of path to be matched and the recall path segment, a direction consistency degree between the recall path segment and the segment of path to be matched;
obtaining, according to curvatures of the segment of path to be matched and the recall path segment, a curvature consistency degree between the recall path segment and the segment of path to be matched; and
obtaining the path score of the recall path segment according to the coincidence degree, the direction consistency degree, and the curvature consistency degree.

In a technical solution of the map matching method, the step of "obtaining, according to track points of the path to be matched and the multiple candidate paths, a final matching result of the path to be matched" includes:
for each candidate path, obtaining a start point offset and an end point offset of the candidate path and the path to be matched;
obtaining an average matching score of the candidate path according to a path score of each candidate path segment in the candidate path;
obtaining an average projection distance from the path to be matched to the candidate path according to a projection distance from each track point of the path to be matched to the candidate path;
obtaining a whole path segment score of each candidate path according to the start point offset, the end point offset, the average matching score, and the average projection distance;
sorting the obtained candidate paths according to the whole path segment score of each candidate path; and
obtaining, according to a sorting result, the final matching result of the path to be matched.

In a technical solution of the map matching method, before the step of "dividing the path to be matched, to obtain multiple segments of path to be matched", the method further includes:
when the density of the track points of the path to be matched is greater than a preset density threshold, the track points of the path to be matched are downsampled.

In a second aspect, a control apparatus is provided. The control apparatus comprises a processor and a storage apparatus configured to store multiple pieces of program code, which is configured to be loaded and run by the processor to execute the foregoing map matching method in any one of the technical solutions of the foregoing map matching method.

In a third aspect, a computer-readable storage medium is provided. The computer-readable storage medium stores multiple pieces of program code, which is configured to be loaded and run by a processor to execute the foregoing map matching method in any one of the technical solutions of the foregoing map matching method.

In a fourth aspect, a vehicle is provided, including the foregoing control apparatus in the technical solutions of the foregoing control apparatus.

The foregoing one or more technical solutions of the disclosure have at least one or more of the following beneficial effects:
In the technical solutions for implementing the disclosure, the disclosure divides the path to be matched, obtains multiple candidate path segments according to the track points of the segments of path to be matched and the topology information of the target map, obtains multiple candidate paths according to the multiple candidate path segments, and then obtains the final matching result of the path to be matched. In the foregoing configuration manner, the path to be matched is divided into the multiple segments of path to be matched and the multiple candidate path segments are obtained according to the track points of the segments of path to be matched, so that the disclosure can effectively reduce the computation in a process of obtaining the candidate paths. At the same time, because the disclosure only uses general map specification information of the map in the process of map matching, such as the track points of the path to be matched and the topology information of the target map, the map matching method of the disclosure does not cause the loss of input information and need to be re-matched due to switching between map manufacturers or the like. The method is highly universal and can achieve real-time and efficient map matching.

### Brief Description of the Drawings

The disclosed content of the disclosure will become more readily understood with reference to the appended drawings. Those skilled in the field readily understand that the appended drawings are merely for illustrative purposes and are not intended to limit the protection scope of the disclosure. In the figures:
FIG. 1 is a schematic flowchart of main steps of a map matching method according to an embodiment of the disclosure; and
FIG. 2 is a schematic flowchart of main steps of a map matching method in an implementation according to an embodiment of the disclosure.

### Detailed Description of Embodiments

Some implementations of the disclosure are described below with reference to the appended drawings. Those skilled in the field should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

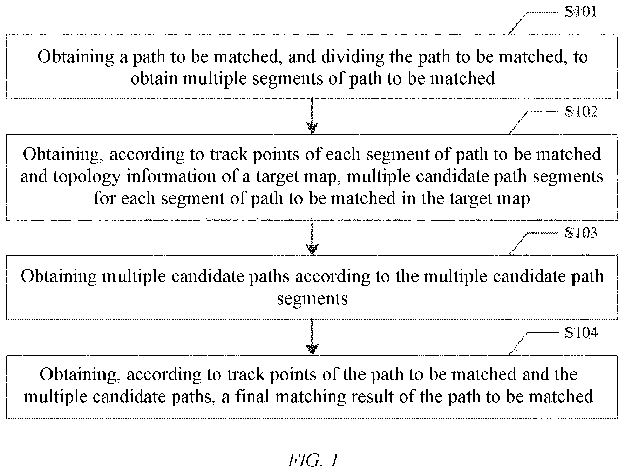

Referring to FIG. 1, FIG. 1 is a schematic flowchart of main steps of a map matching method according to an embodiment of the disclosure. As shown in FIG. 1, the map matching method in this embodiment of the disclosure mainly includes steps S 101 to S 104 below.

Step S101: Obtaining a path to be matched, and dividing the path to be matched, to obtain multiple segments of path to be matched.

In this embodiment, the path to be matched may be divided to obtain the multiple segments of path to be matched.

In an implementation, a path length of a segment may be a fixed value, or may be selected according to a requirement of a practical application.

Step S102: Obtaining, according to track points of each segment of path to be matched and topology information of a target map, multiple candidate path segments for each segment of path to be matched in the target map.

In this embodiment, the multiple candidate path segments for each segment of path to be matched in the target map may be obtained according to the track points of the segment of path to be matched and the topology information of the target map.

In an implementation, the path to be matched may be a series of orderly track points, and the series of orderly track points may be vehicle tracks or path shape points of a source map. When the path to be matched is a path in the source map, the track points of the path to be matched are path shape points.

In an implementation, when the density of the track points of the path to be matched is greater than a preset density threshold, the track points of the path to be matched may be down-sampled to select different numbers of track points according to different segments of path to be matched. It should be noted that a path shape of the path to be matched cannot be changed in the process of down-sampling the track points. By down-sampling the track points, the computing volume in the map matching process can be reduced while the matching precision can be ensured.

In an implementation, the topology information of the target map may include general map specification information such as shape points, path curves, path network connectivity, path directions, and curvatures of paths in the target map.

Step S103: Obtaining multiple candidate paths according to the multiple candidate path segments.

In this embodiment, the multiple candidate paths may be obtained according to path network connectivity between the multiple candidate path segments.

Step S104: Obtaining, according to track points of the path to be matched and the multiple candidate paths, a final matching result of the path to be matched.

In this implementation, the final matching result of the path to be matched may be selected from the multiple candidate paths according to the track points of the path to be matched.

Based on the above steps S101 to S104, in this embodiment of the disclosure, the path to be matched is divided, multiple candidate path segments are obtained according to the track points of the segments of path to be matched and the topology information of the target map, multiple candidate paths are obtained according to the multiple candidate path segments, and the final matching result of the path to be matched is obtained. In the foregoing configuration manner, the path to be matched is divided into the multiple segments of path to be matched and the multiple candidate path segments are obtained according to the track points of the segments of path to be matched, so that this embodiment of the disclosure can effectively reduce the computing volume in a process of obtaining the candidate paths. At the same time, in the process of map matching, the disclosure only uses general map specification information of the map such as the track points of the path to be matched and the topology information of the target map. Therefore, in the map matching method of the disclosure, switching between map manufacturers or the like does not cause loss of input information, and re-adaptation is not required. The method is highly universal and can achieve real-time and efficient map matching.

Step S 102 and step S104 will be further described below.

In an implementation of this embodiment of the disclosure, step S102 may include step S1021 and step S1022 below.

Step S1021: For each segment of path to be matched, obtaining, according to the track points of the segment of path to be matched and the topology information of the target map, multiple recall path segments for each segment of path to be matched in the target map, where the recall path segments are path segments that are within a preset distance from each segment of path to be matched and that are in the target map.

In this implementation, step S1021 may further include step S10211 to step S10214 below.

Step S10211: Obtaining multiple shape points that are within a first preset distance from each track point of the segment of path to be matched and that are in the target map.

In this implementation, the multiple shape points that are within the first preset distance from each track point of the segment of path to be matched and that are in the target map may be obtained.

In an implementation, a distance between a track point and a shape point in the target map may be calculated according to coordinates or longitude and latitude information of the track point and the shape point.

For example, shape points within 500 m from the track point in the target map are obtained according to coordinates or longitude and latitude information of the track point.

Step S 10212: Obtaining multiple path curves according to the multiple shape points.

In this implementation, path curves formed by multiple shape points may be obtained according to the path network connectivity between the multiple shape points obtained in step S10211.

Step S10213: Comparing projection distances from the track points of the segment of path to be matched to the multiple path curves with a preset distance threshold.

In this implementation, the projection distances from the track points of the segment of path to be matched to the multiple path curves may be calculated, and may be compared with the preset distance threshold. A projection distance is the shortest distance from a track point to a path curve, that is, the track point is connected to all points constituting the path curve, and a length of the shortest connecting line is selected as the projection distance. A distance from a point to a curve is simplified as the projection distance, which can effectively reduce the computation and improve computing efficiency.

Step S 10214: Obtaining, from the multiple path curves based on a comparison result, the multiple recall path segments of the segment of path to be matched.

In this implementation, the multiple recall path segments may be selected from the multiple path curves based on the comparison result. That is, when a projection distance of a path curve is less than the preset projection distance threshold, the path curve is used as the recall path segment.

Step S1022: Obtaining, according to the segment of path to be matched and topology information of the recall path segments in the target map, the multiple candidate path segments for the segment of path to be matched.

In this implementation, step S 1022 may include step S 10221 and step S 10222 below.

Step S10221: Obtaining a path score of each recall path segment according to the current segment of path to be matched and topology information of the recall path segment.

In this implementation, step S 10221 may further include step S 102211 to step S 102214 below.

Step S102211: For each recall path segment, obtaining, according to projection distances from all track points of the segment of path to be matched to the recall path segment, a coincidence degree of the recall path segment and the segment of path to be matched.

In this implementation, an average of the projection distances from all the track points of the segment of path to be matched to the recall path segment may be obtained according to the projection distances, and the average of the projection distances represents the coincidence degree of the recall path segment and the segment of path to be matched.

Step S 102212: Obtaining, according to path directions of the segment of path to be matched and the recall path segment, a direction consistency degree of the recall path segment and the segment of path to be matched.

In this implementation, the direction consistency degree of the recall path segment and the segment of path to be matched may be determined according to the path directions of the segment of path to be matched and the recall path segment.

Step S 102213 : Obtaining, according to curvatures of the segment of path to be matched and the recall path segment, a curvature consistency degree of the recall path segment and the segment of path to be matched.

In this implementation, the curvature consistency degree of the recall path segment and the segment of path to be matched may be determined according to the curvatures of the segment of path to be matched and the recall path segment.

Step S 102214: Obtaining the path score of the recall path segment according to the coincidence degree, the direction consistency degree, and the curvature consistency degree.

In this implementation, the path score of the recall path segment may be determined according to all the coincidence degree, the direction consistency degree, and the curvature consistency degree of the segment of path to be matched and the recall path segment.

In an implementation, weights may be set for the coincidence degree, the direction consistency degree, and the curvature consistency degree respectively according to a requirement of a practical application, and weighting calculation is performed on the coincidence degree, the direction consistency degree, and the curvature consistency degree to obtain the path score of the recall path segment.

Step S 10222: Obtaining, according to path scores of the recall path segments and the topology information of the recall path segments, the multiple candidate path segments for the segment of path to be matched.

In this implementation, step S 10222 may further include step S 102221 to step S 102223 below.

Step S 102221: Sorting the path scores of the recall path segments, and obtaining a preset number of first path segments according to a sorting result.

In this implementation, the path scores of the recall path segments may be sorted, and the preset number of first path segments may be obtained according to the sorting result. A person skilled in the field may set a value of the preset number according to a requirement of a practical application.

In an implementation, the path scores of the recall path segments may be sorted in descending order, and the top N recall path segments may be selected as the first path segments according to the sorting result. A person skilled in the field may set a value of N according to a requirement of a practical application.

Step S 102222: Obtaining, according to path network connectivity of the first path segment, a subsequent path segment with path network connectivity to the first path segment within a second preset distance.

In this implementation, after the first path segment is obtained, the subsequent path segment of the first path segment within the second preset distance may be obtained according to the path network connectivity of the first path segment. That is, if the first path segment has a subsequent path segment within the second preset distance, the subsequent path segment is also recalled. The subsequent path segment may be one path segment connected to the first path segment, or multiple branch path segments connected to the first path segment.

Step S102223: Obtaining the candidate path segments based on the first path segment and the subsequent path segment.

In this implementation, step S 102223 may further include step S 102231 and step S 102232 below.

Step S 102231: Determining the number of obtained subsequent path segments.

Step S102232: When the number of obtained subsequent path segments is greater than zero, using each subsequent path segment as the current recall path segment in turn, and performing step S 1022 in a loop, until the number of obtained subsequent path segments is zero.

In this implementation, the number of subsequent path segments may be determined. If the number of subsequent path segments is greater than zero, each subsequent path segment may be used as a recall path segment in turn, and step S1022 is performed until the number of obtained subsequent path segments is zero.

In an implementation, step S102 may also include steps S1023 to S1024 below in addition to the above step S1021 and step S1022.

Step S1023: Determining whether the current segment of path to be matched is the last segment of path to be matched. If yes, step S103 is performed. If not, step S1024 is performed.

Step S1024: Obtaining a next segment of path to be matched as a current segment of path to be matched, and performing step S10222.

In this implementation, when the current segment of path to be matched is the last segment of path to be matched, step S103 may be performed. When the current segment of path to be matched is not the last segment of path to be matched, the next segment of path to be matched is used as a current path segment and step S 10222 is performed.

In an implementation of this embodiment of the disclosure, step S103 may further include the following step S1031 to step S1036.

Step S1031: For each candidate path, obtaining a start point offset and an end point offset of the candidate path and the path to be matched.

In this implementation, the start point offset and the end point offset between the path to be matched and the candidate path may be calculated according to start points and end points of the path to be matched and the candidate path.

Step S 1032: Obtaining an average matching score of the candidate path according to a path score of each candidate path segment in the candidate path.

In this implementation, an average of path scores of all candidate path segments in the candidate path may be calculated as the average matching score of the candidate path.

Step S1033: Obtaining an average projection distance from the path to be matched to the candidate path according to a projection distance from each track point of the path to be matched to the candidate path.

In this implementation, an average of the projection distances from all track points of the path to be matched to the candidate path may be calculated according to the projection distances as the average projection distance from the path to be matched to the candidate path.

Step S 1034: Obtaining a whole path segment score of each candidate path according to the start point offset, the end point offset, the average matching score, and the average projection distance.

In this implementation, weights may be set for the start point offset, the end point offset, the average matching score, and the average projection distance respectively, weighting calculation is performed on the start point offset, the end point offset, the average matching score, and the average projection distance, and a weighting calculation result is used as the whole path segment score of each candidate path.

Step S1035: Sorting the obtained candidate paths according to the whole path segment score of each candidate path.

In this implementation, the candidate paths may be sorted according to the whole path segment score of each candidate path.

Step S1036: Obtaining, according to a sorting result, the final matching result of the path to be matched.

In this implementation, according to the sorting result of the candidate paths, the top N candidate paths may be selected as the final matching result of the path to be matched. A person skilled in the field may set a value of N according to a requirement of a practical application.

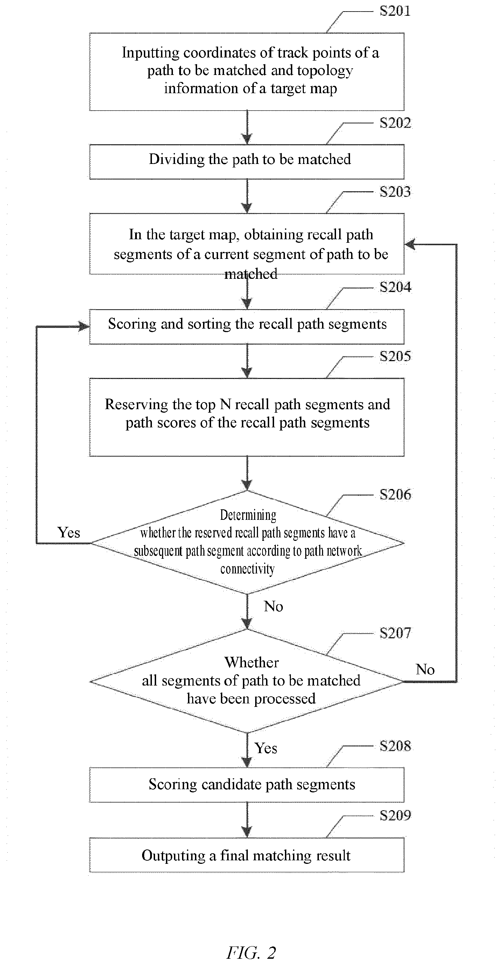

In an implementation, refer to FIG. 2. FIG. 2 is a schematic flowchart of main steps of a map matching method in an implementation according to an embodiment of the disclosure. As shown in FIG. 2, the map matching method of this implementation may include step S201 to step S209 below.

Step S201: Inputting coordinates of track points of a path to be matched and topology information of a target map.

In this implementation, the coordinates of the track points of the path to be matched and the topology information of the target map may be input first.

Step S202: Dividing the path to be matched.

In this implementation, the method in step S202 is similar to that described in step S101. For illustrative purposes, details are not described herein again.

Step S203: In the target map, obtaining recall path segments of a current segment of path to be matched.

In this implementation, the method in step S203 is similar to that described in step S1021. For illustrative purposes, details are not described herein again.

Step S204: Scoring and sorting the recall path segments.

In this implementation, the method in step S204 is similar to that described in step S10221. For illustrative purposes, details are not described herein again.

Step S205: Reserving the top N recall path segments and path scores of the recall path segments.

In this implementation, the method in step S205 is similar to that described in step S102221. For illustrative purposes, details are not described herein again.

Step S206: Determining whether the reserved recall path segments have a subsequent path segment according to path network connectivity. If yes, the subsequent path segment is used as the recall path segment and step S204 is performed. If not, step S207 is performed.

In this implementation, the method in step S206 is similar to that described in step S102222. For illustrative purposes, details are not described herein again.

Step S207: Whether all segments of path to be matched have been processed. If yes, step S208 is performed. If not, step S203 is performed.

In this implementation, the method in step S207 is similar to that described in step S1023. For illustrative purposes, details are not described herein again.

Step S208: Scoring candidate path segments.

In this implementation, the method in step S208 is similar to those described in step S1031 to step S1035. For illustrative purposes, details are not described herein again.

Step S209: Outputing a final matching result.

In this implementation, the method in step S209 is similar to that described in step S1036. For illustrative purposes, details are not described herein again.

It should be noted that, although the steps are described in a specific order in the foregoing embodiments, those skilled in the field can understand that in order to achieve the effects of the disclosure, different steps are not necessarily performed in such an order, but may be performed simultaneously (in parallel) or in other orders, and these changes shall all fall within the scope of protection of the disclosure.

Those skilled in the field can understand that all or some of the procedures in the method of the foregoing embodiment of the disclosure may also be implemented by a computer program instructing relevant hardware. The computer program may be stored in a computer-readable storage medium, and when the computer program is executed by a processor, the steps of the foregoing method embodiments can be implemented. The computer program includes computer program code, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that the content included in the computer-readable storage medium can be appropriately added or deleted depending on requirements of the legislation and patent practice in a jurisdiction. For example, in some jurisdictions, according to the legislation and patent practice, the computer-readable storage medium does not include an electrical carrier signal and a telecommunications signal.

Further, the disclosure further provides a control apparatus. In an embodiment of the control apparatus according to the disclosure, the control apparatus includes a processor and a storage apparatus. The storage apparatus may be configured to store a program for executing the map matching method of the foregoing method embodiments. The processor may be configured to execute a program in the storage apparatus, where the program includes, but is not limited to, the program for executing the map matching method of the foregoing method embodiments. For illustrative purposes, only parts related to the embodiments of the disclosure are shown. For specific technical details that are not disclosed, reference may be made to the method part of the embodiments of the disclosure. The control apparatus may be a control apparatus device formed by various electronic devices.

Further, the disclosure further provides a computer-readable storage medium. In an embodiment of the computer-readable storage medium according to the disclosure, the computer-readable storage medium may be configured to store a program for executing the map matching method in the foregoing embodiments, and the program may be loaded and run by a processor to implement the foregoing map matching method. For illustrative purposes, only parts related to the embodiments of the disclosure are shown. For specific technical details that are not disclosed, reference may be made to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, the disclosure further provides a vehicle. In an embodiment of the vehicle according to the disclosure, the vehicle includes the control apparatus in the foregoing embodiment of the control apparatus.

Further, it should be understood that, because the configuration of modules is merely intended to illustrate functional units of the apparatus of the disclosure, physical devices corresponding to these modules may be a processor itself, or part of software, part of hardware, or part of a combination of software and hardware in the processor. Therefore, the number of modules in the figure is merely illustrative.

Those skilled in the field can understand that the modules in the apparatus may be adaptively split or combined. Such a split or combination of specific modules does not cause the technical solutions to depart from the principle of the disclosure. Therefore, all technical solutions after any such split or combination shall fall within the scope of protection of the disclosure.

At this point, the technical solutions of the disclosure have been described with reference to the preferred embodiments shown in the appended drawings. However, those skilled in the field can readily understand that the scope of protection of the disclosure is apparently not limited to these specific embodiments. Those skilled in the field can make equivalent changes or substitutions to the related technical features without departing from the principle of the disclosure, and all the technical solutions with such changes or substitutions shall fall within the scope of protection of the disclosure.

## Claims

1. A map matching method, comprising:
obtaining a path to be matched, and dividing the path to be matched, to obtain multiple segments of path to be matched;
obtaining, according to track points of each segment of path to be matched and topology information of a target map, multiple candidate path segments for each segment of path to be matched in the target map;
obtaining multiple candidate paths according to the multiple candidate path segments; and
obtaining, according to track points of the path to be matched and the multiple candidate paths, a final matching result of the path to be matched.

2. The map matching method according to claim 1, wherein the step of "obtaining, according to track points of each segment of path to be matched and topology information of a target map, multiple candidate path segments for each segment of path to be matched in the target map" comprises:
for each segment of path to be matched, obtaining, according to the track points of the segment of path to be matched and the topology information of the target map, multiple recall path segments for each segment of path to be matched in the target map, wherein the recall path segments are path segments that are within a preset distance from each segment of path to be matched in the target map; and
obtaining, according to the segment of path to be matched and topology information of the recall path segments in the target map, the multiple candidate path segments for the segment of path to be matched.

3. The map matching method according to claim 2, wherein the topology information comprises shape points and path curves, and the step of "obtaining, according to the track points of the segment of path to be matched and the topology information of the target map, multiple recall path segments for the segment of path to be matched in the target map" comprises:
obtaining multiple shape points that are within a first preset distance from each track point of the segment of path to be matched in the target map;
obtaining multiple path curves according to the multiple shape points;
comparing projection distances from the track points of the segment of path to be matched to the multiple path curves with a preset distance threshold; and
obtaining, from the multiple path curves based on a comparison result, the multiple recall path segments for the segment of path to be matched.

4. The map matching method according to claim 2, wherein the step of "obtaining, according to the segment of path to be matched and topology information of the recall path segments in the target map, the multiple candidate path segments for the segment of path to be matched" comprises:
obtaining a path score of each recall path segment according to the current segment of path to be matched and topology information of the recall path segment; and
obtaining, according to path scores of the recall path segments and the topology information of the recall path segments, the multiple candidate path segments for the segment of path to be matched.

5. The map matching method according to claim 4, wherein the topology information of the recall path segments comprises path network connectivity, and the step of "obtaining, according to path scores of the recall path segments and the topology information of the recall path segments, the multiple candidate path segments for the segment of path to be matched" comprises:
sorting the path scores of the recall path segments, and obtaining a preset number of first path segments according to a sorting result;
obtaining, according to path network connectivity of the first path segment, a subsequent path segment with path network connectivity to the first path segment within a second preset distance; and
obtaining the candidate path segments based on the first path segment and the subsequent path segment.

6. The map matching method according to claim 5, wherein the "obtaining the candidate path segments based on the first path segment and the subsequent path segment" comprises:
determining the number of obtained subsequent path segments; and
when the number of obtained subsequent path segments is greater than zero, each subsequent path segment is used as the current recall path segment in turn. And perform the step of "obtaining, according to path scores of the recall path segments and the topology information of the recall path segments, the multiple candidate path segments for the segment of path to be matched" in a loop, until the number of obtained subsequent path segments is zero.

7. The map matching method according to claim 6, wherein the step of "obtaining, according to track points of each segment of path to be matched and topology information of a target map, multiple candidate path segments for each segment of path to be matched in the target map" further comprises:
determining whether the current segment of path to be matched is the last segment of path to be matched;
if so, performing the step of "obtaining multiple candidate paths according to the multiple candidate path segments"; and
if not, obtaining a next segment of path to be matched as a current segment of path to be matched, and performing the step of "obtaining, according to the segment of path to be matched and topology information of the recall path segments in the target map, the multiple candidate path segments for the segment of path to be matched".

8. The map matching method according to any one of claims 4 to 7, wherein the topology information comprises a path direction and a curvature, and the step of "obtaining a path score of each recall path segment according to the current segment of path to be matched and topology information of the recall path segment" comprises:
for each recall path segment, obtaining, according to projection distances from all track points of the segment of path to be matched to the recall path segment, a coincidence degree of the recall path segment and the segment of path to be matched;
obtaining, according to path directions of the segment of path to be matched and the recall path segment, a direction consistency degree of the recall path segment and the segment of path to be matched;
obtaining, according to curvatures of the segment of path to be matched and the recall path segment, a curvature consistency degree of the recall path segment and the segment of path to be matched; and
obtaining the path score of the recall path segment according to the coincidence degree, the direction consistency degree, and the curvature consistency degree.

9. The map matching method according to claim 8, wherein the step of "obtaining, according to track points of the path to be matched and the multiple candidate paths, a final matching result of the path to be matched" comprises:
for each candidate path, obtaining a start point offset and an end point offset of the candidate path and the path to be matched;
obtaining an average matching score of the candidate path according to a path score of each candidate path segment in the candidate path;
obtaining an average projection distance from the path to be matched to the candidate path according to a projection distance from each track point of the path to be matched to the candidate path;
obtaining a whole path segment score of each candidate path according to the start point offset, the end point offset, the average matching score, and the average projection distance;
sorting the obtained candidate paths according to the whole path segment score of each candidate path; and
obtaining, according to a sorting result, the final matching result of the path to be matched.

10. The map matching method according to any one of claims 1 to 9, wherein before the step of "dividing the path to be matched, to obtain multiple segments of path to be matched", the method further comprises:
when the density of the track points of the path to be matched is greater than a preset density threshold, down-sampling the track points of the path to be matched.

11. A control apparatus, comprising a processor and a storage apparatus configured to store multiple pieces of program code, wherein the program code is configured to be loaded and run by the processor to perform the map matching method according to any one of claims 1 to 10.

12. A non-transitory computer-readable storage medium storing multiple pieces of program code, wherein the program code is configured to be loaded and run by a processor to perform the map matching method according to any one of claims 1 to 10.

13. A vehicle, comprising the control apparatus according to claim 11.
